# DEMANDE DE BREVET EUROPEEN

(11) **EP 4 620 789 A1**
(43) Date de publication de la demande: **24.09.2025**
(21) Numéro de dépôt: 25158600.4
(22) Date de dépôt: 18.02.2025
(51) Int. Cl.: B62D 25/02, B62D 21/15, B62D 25/20

(54) **LONGERON À DISPOSITIF DE RENFORT, POUR UN VÉHICULE AUTOMOBILE**

(30) Priorité: 19.03.2024 FR 2402701
(71) Demandeur: Stellantis Auto SAS, 78300 Poissy (FR)
(72) Inventeur: BERTH, Stephane, 92320 Chatillon (FR); CADET, Stephane, 70110 Les Magny (FR)
(74) Mandataire: BCIP

(57) **Abrégé**

Un longeron (LV) est installé parallèlement à un côté longitudinal (CL) d'un plancher (PV) d'un soubassement (SV) d'un véhicule automobile, et comprend une paroi principale (PP) longitudinale et à laquelle est solidarisé un dispositif de renfort (DR) comprenant :
- des ensembles inférieur (EI) et supérieur (ES) respectivement de premières (C1) et secondes (C2) cloisons installées perpendiculairement à la paroi principale (PP), ces premières (C1) ou secondes (C2) cloisons comprenant un décrochement (DC) sur un côté orienté vers la paroi principale (PP),
- des équerres inférieure (EQI) et supérieure (EQS) longitudinales, auxquelles sont solidarisés fixement les ensembles inférieur (EI) et supérieur (ES), et solidarisées fixement à la paroi principale (PP), et
- un raidisseur (RL) longitudinal et comportant une première paroi (PR1) logée dans les décrochements (DC) et prolongée par une seconde paroi (PR2) solidarisée fixement à l'équerre inférieure (EQI) ou supérieure (EQS).

## Description

### Domaine technique de l'invention

L'invention concerne les véhicules automobiles comprenant un soubassement comportant un plancher ayant deux côtés longitudinaux opposés, et plus précisément les longerons qui encadrent ces deux côtés longitudinaux opposés.

### Etat de la technique

Certains véhicules automobiles comprennent un soubassement faisant partie de leur structure et comportant un plancher ayant des côtés longitudinaux droit et gauche et deux longerons, droit et gauche, installés respectivement parallèlement à ces côtés longitudinaux droit et gauche.

Afin que les passagers des véhicules (automobiles) présentés ci-avant soient protégés lorsque ces derniers subissent un choc latéral sur l'un de leurs côtés longitudinaux droit et gauche, leurs longerons peuvent être équipés d'un dispositif de renfort. On entend ici par « choc latéral » un choc suivant une direction ayant une composante transversale non nulle.

Ce dispositif de renfort est destiné à amortir au moins partiellement l'énergie du choc latéral, et peut comprendre à cet effet, d'une part, des ensembles inférieur et supérieur respectivement de premières et secondes cloisons installées perpendiculairement à la paroi principale (sensiblement verticale) de son longeron, et, d'autre part, des équerres inférieure et supérieure longitudinales, auxquelles sont solidarisés fixement (par exemple par soudage) et respectivement les ensembles inférieur et supérieur, et solidarisées fixement (par exemple par soudage) à la paroi principale du longeron. On notera que les premières et secondes cloisons peuvent être agencées en créneaux.

Les dispositifs de renfort décrits ci-avant améliorent la situation, mais ils n'apportent pas une entière satisfaction du fait que le lien des premières et secondes cloisons avec les équerres inférieure et supérieure est peu important, et donc l'amortissement d'énergie peut s'avérer insuffisant. De ce fait, en cas de choc latéral subi par un longeron, ce dernier peut être significativement déformé, ce qui peut provoquer des dommages au niveau du plancher et donc aussi au niveau des équipements installés au moins en partie sur ce dernier, ce qui est potentiellement dangereux pour les passagers du véhicule.

On notera que lorsque le véhicule à un groupe motopropulseur (ou GMP) de type tout électrique ou hybride (thermique et électrique), il comprend un ensemble (ou « pack ») de batterie rechargeable qui peut être installé entre ses longerons latéraux, sous son plancher, et devant aussi être protégé en cas de choc latéral. Or, en cas de déformation significative d'un longeron, l'ensemble de batterie rechargeable peut être endommagé, ce qui peut occasionner une fuite et/ou un déclenchement d'incendie.

L'invention a donc notamment pour but d'améliorer la situation pour augmenter la protection passive des passagers, ainsi que d'un éventuel ensemble de batterie rechargeable, en cas de choc latéral.

### Présentation de l'invention

Elle propose notamment à cet effet un longeron, d'une part, propre à être installé parallèlement à un côté longitudinal d'un plancher d'un soubassement d'un véhicule automobile, et, d'autre part, comprenant une paroi principale longitudinale et à laquelle est solidarisé un dispositif de renfort comprenant :
- des ensembles inférieur et supérieur respectivement de premières et secondes cloisons installées perpendiculairement à la paroi principale, et
- des équerres inférieure et supérieure longitudinales, auxquelles sont solidarisés fixement et respectivement les ensembles inférieur et supérieur, et solidarisées fixement à la paroi principale.

Ce longeron se caractérise par le fait :
- que les premières ou secondes cloisons comprennent un décrochement sur un côté orienté vers la paroi principale, et
- que son dispositif de renfort comprend en outre un raidisseur longitudinal et comportant une première paroi logée dans les décrochements et prolongée par une seconde paroi solidarisée fixement à l'équerre inférieure ou supérieure.

Grâce à ce raidisseur, les premières et secondes cloisons ont un bien meilleur lien avec les équerres inférieure et supérieure, ce qui leur permet d'assurer leur fonction d'amortissement de l'énergie d'un choc latéral subi par leur véhicule.

Le longeron selon l'invention peut comporter d'autres caractéristiques qui peuvent être prises séparément ou en combinaison, et notamment :
- les décrochements peuvent être définis au voisinage d'une interface entre les premières et secondes cloisons ;
- en présence de la première option, la première paroi du raidisseur peut être solidarisée fixement aux premières et secondes cloisons au niveau des décrochements ;
- les décrochements peuvent être définis dans les premières cloisons sur le côté qui est orienté vers la paroi principale, et la seconde paroi peut être solidarisée fixement à l'équerre inférieure ;
- le raidisseur peut avoir une section, dans un plan perpendiculaire à la paroi principale, en forme générale de L ;
- les premières cloisons peuvent être agencées en créneaux, et les secondes cloisons peuvent être aussi agencées en créneaux ;
- les secondes cloisons peuvent être supportées par les premières cloisons ;
- il peut comprendre une paroi inférieure longitudinale, prolongeant sensiblement à 90° la paroi principale, et sur laquelle est installé fixement l'ensemble inférieur.

L'invention propose également un véhicule automobile comprenant un soubassement comportant un plancher ayant des côtés longitudinaux droit et gauche et deux longerons, droit et gauche, du type de celui présenté ci-avant et installés respectivement parallèlement aux côtés longitudinaux droit et gauche.

Par exemple, ce véhicule automobile peut aussi comprendre un ensemble de batterie rechargeable installé sous le plancher entre les longerons droit et gauche.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective de côté, une partie d'un exemple de soubassement de véhicule automobile comportant un exemple de réalisation d'un longeron selon l'invention,
[Fig. 2] illustre schématiquement, dans une vue en coupe dans un plan transversal et vertical au niveau du longeron droit, une partie droite du soubassement de la figure 1, et
[Fig. 3] illustre schématiquement, dans une vue en perspective de côté, une partie du dispositif de renfort du longeron droit des figures 1 et 2.

### Description détaillée de l'invention

L'invention a notamment pour but de proposer un longeron LV destiné à faire partie d'un soubassement SV d'un véhicule automobile et comportant un dispositif de renfort DR à forte capacité d'amortissement de l'énergie d'un choc latéral.

Dans ce qui suit, on considère, à titre d'exemple non limitatif, que le véhicule automobile est une voiture. Mais l'invention n'est pas limitée à ce type de véhicule automobile. Elle concerne en effet tout véhicule automobile comprenant une structure comportant un plancher (intégrant d'éventuelle(s) traverse(s)) encadré par deux longerons.

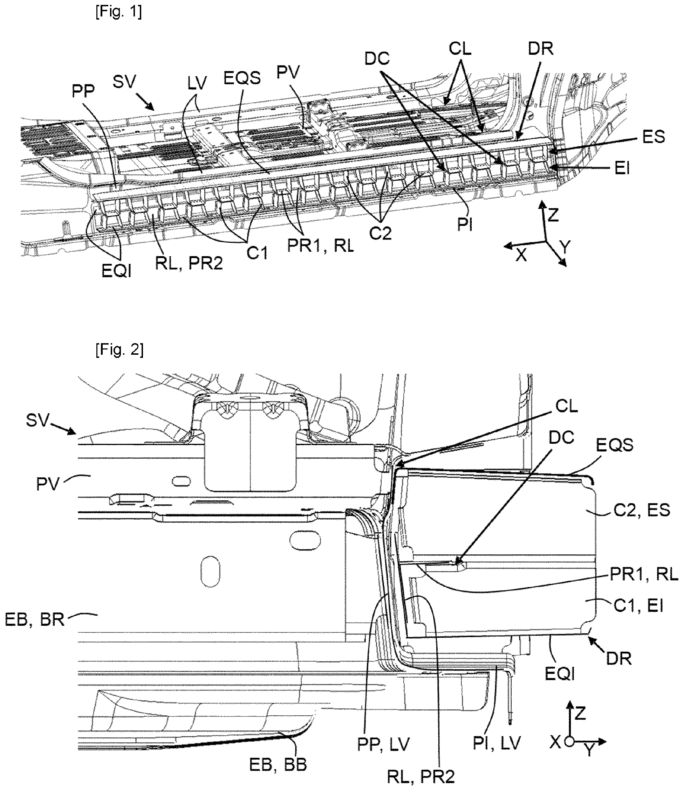

Sur les figures 1 à 3 la direction X est destinée à être parallèle à la direction longitudinale du véhicule (automobile), laquelle est sensiblement parallèle aux côtés latéraux (ou longitudinaux) comportant les portières latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

On a schématiquement illustré sur les figures 1 et 2 une partie d'un exemple de soubassement SV d'un véhicule (automobile), comportant un exemple de réalisation d'un longeron LV selon l'invention. Bien que cela n'apparaisse que partiellement sur les figures 1 et 2 (seulement pour le côté droit), le soubassement SV comprend notamment un plancher PV ayant des côtés longitudinaux CL droit et gauche, et deux longerons LV, droit et gauche, installés respectivement parallèlement aux côtés longitudinaux CL droit et gauche.

On notera que dans l'exemple illustré non limitativement sur la figure 2 le véhicule comprend aussi un ensemble (ou « pack ») de batterie rechargeable EB installé sous le plancher PV entre les longerons LV droit et gauche. Mais cela n'est pas obligatoire, car l'invention s'applique également lorsque le véhicule est dépourvu d'ensemble de batterie rechargeable EB.

L'ensemble de batterie rechargeable EB comprend un bac de batterie BB logeant une batterie rechargeable BR (de préférence avec son électronique de contrôle), et solidarisé fixement (par vissage) au plancher PV (par exemple au niveau d'une feuillure périphérique de ce dernier (PV)). On notera que dans l'exemple illustré non limitativement sur la figure 2 le plancher PV assure une fonction de couvercle de protection pour le bac de batterie BB, la batterie rechargeable BR et l'éventuelle électronique de contrôle. Mais l'ensemble de batterie rechargeable EB pourrait comprendre un couvercle de protection dédié.

Par exemple, la batterie rechargeable BR peut comporter au moins un module cellulaire comportant au moins deux cellules de stockage d'énergie électrique. On entend ici par « cellule de stockage d'énergie électrique » une cellule rechargeable et éventuellement électrochimique (par exemple de type lithium-ion (ou Li-ion) ou Ni-Mh ou Ni-Cd).

Comme illustré au moins partiellement sur les figures 1 à 3, un longeron LV, selon l'invention, comprend au moins une paroi principale PP longitudinale (c'est-à-dire s'étendant suivant la direction longitudinale X) et à laquelle est solidarisé un dispositif de renfort DR. Ici, la paroi principale PP est principalement installée dans un plan sensiblement longitudinal et vertical XZ.

Ce dispositif de renfort DR comprend un ensemble inférieur EI de premières cloisons C1, un ensemble supérieur ES de secondes cloisons C2, une équerre inférieure EQI, une équerre supérieure EQS, et un raidisseur RL.

Les premières cloisons C1 de l'ensemble inférieur EI sont installées perpendiculairement à la paroi principale PP. Les secondes cloisons C1 de l'ensemble supérieur ES sont aussi installées perpendiculairement à la paroi principale PP. Comme illustré sur les figures 1 à 3, les premières C1 ou secondes C2 cloisons comprennent un décrochement DC sur un côté qui est orienté vers la paroi principale PP. Par exemple, chaque décrochement DC peut être obtenu par une découpe réalisée dans l'épaisseur d'une première cloison C1, sur une longueur choisie (ici suivant la direction transversale Y).

L'équerre inférieure EQI est longitudinale (ce qui signifie qu'elle s'étend suivant la direction longitudinale X, de préférence sur une grande partie de l'extension longitudinale de la paroi principale PP du longeron LV). Elle présente, par exemple, une section transverse (ici dans un plan YZ) en forme générale de L. De plus, l'équerre inférieure EQI est solidarisée fixement à la paroi principale PP, par exemple par soudage (mais cela pourrait être par vissage ou rivetage).

L'équerre supérieure EQS est aussi longitudinale (ce qui signifie qu'elle s'étend suivant la direction longitudinale X, de préférence sur une grande partie de l'extension longitudinale de la paroi principale PP du longeron LV). Elle présente, par exemple, une section transverse (ici dans un plan YZ) en forme générale de L inversé. De plus, l'équerre supérieure EQS est solidarisée fixement à la paroi principale PP, par exemple par soudage (mais cela pourrait être par vissage ou rivetage).

L'ensemble inférieur EI est solidarisé fixement à l'équerre inférieure EQI, par exemple par soudage (mais cela pourrait être par vissage ou rivetage). L'ensemble supérieur ES est solidarisé fixement à l'équerre supérieure EQS, par exemple par soudage (mais cela pourrait être par vissage ou rivetage).

Le raidisseur RL est longitudinal (ce qui signifie qu'il s'étend suivant la direction longitudinale X, de préférence au moins sur la quasi-totalité de l'extension longitudinale des équerres inférieure EQI et supérieure EQS). De plus, ce raidisseur RL comprend une première paroi PR1 qui est logée dans les décrochements DC, et qui est prolongée par une seconde paroi PR2 solidarisée fixement à l'équerre inférieure EQI ou l'équerre supérieure EQS.

La hauteur (suivant la direction verticale Z) de chaque décrochement DC est donc légèrement supérieure à l'épaisseur (suivant la direction verticale Z) de la première paroi PR1.

Grâce à ce raidisseur RL qui pénètre dans les premières C1 et secondes C2 cloisons tout en étant solidarisée fixement à l'équerre inférieure EQI ou l'équerre supérieure EQS, les premières C1 et secondes C2 cloisons des ensembles inférieur EI et supérieur ES ont un bien meilleur lien avec les équerre inférieure EQI et équerre supérieure EQS. Cela permet aux premières C1 et secondes C2 cloisons d'assurer leur fonction d'amortissement de l'énergie d'un choc latéral subi par leur véhicule. La protection passive des passagers, ainsi que de l'éventuel ensemble de batterie rechargeable EB est donc augmentée en cas de choc latéral.

Par exemple, les premières cloisons C1, les secondes cloisons C2, l'équerre inférieure EQI, l'équerre supérieure EQS, et le raidisseur RL peuvent être réalisés en acier ou en aluminium.

Egalement par exemple, et comme illustré non limitativement sur les figures 1 à 3, les décrochements DC peuvent être définis au voisinage de l'interface entre les premières C1 et secondes C2 cloisons. Cela permet en effet d'optimiser le lien entre les premières C1 et secondes C2 cloisons et les équerres inférieure EQI et supérieure EQS, et donc de favoriser l'amortissement de l'énergie d'un choc latéral par les premières C1 et secondes C2 cloisons. Mais les décrochements DC pourraient être définis à un niveau vertical différent du niveau de l'interface précitée.

On notera qu'en présence de la précédente option, il est avantageux que la première paroi PR1 du raidisseur RL soit solidarisée fixement aux premières C1 et secondes C2 cloisons au niveau des décrochements DC, par exemple par soudage (mais cela pourrait être par vissage ou rivetage). Cela permet en effet que toutes les premières C1 et secondes C2 cloisons soient liées entre elles en plus d'être liées aux équerre inférieure EQI et équerre supérieure EQS.

Egalement par exemple, et comme illustré non limitativement sur les figures 1 à 3, les décrochements DC peuvent être définis dans les premières cloisons C1 sur le côté qui est orienté vers la paroi principale PP, et la seconde paroi PR2 peut être solidarisée fixement à l'équerre inférieure EQI. Mais dans une première variante de réalisation non illustrée, les décrochements DC pourraient être définis dans les premières cloisons C1 sur le côté qui est orienté vers la paroi principale PP, et la seconde paroi PR2 pourrait être solidarisée fixement à l'équerre supérieure EQS. Dans une seconde variante de réalisation non illustrée, les décrochements DC pourraient être définis dans les secondes cloisons C2 sur le côté qui est orienté vers la paroi principale PP, et la seconde paroi PR2 pourrait être solidarisée fixement à l'équerre supérieure EQS.

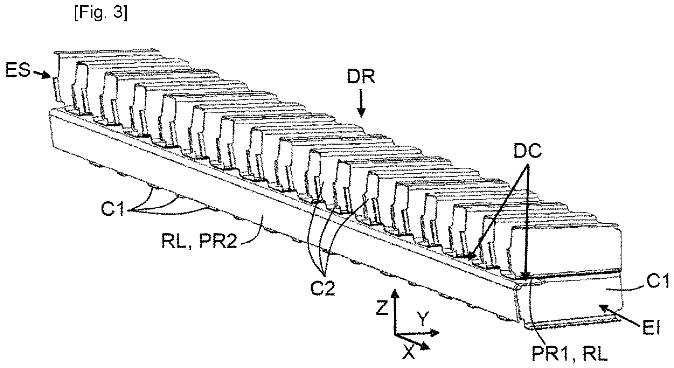

Egalement par exemple, et comme illustré non limitativement sur les figures 2 et 3, le raidisseur RL peut avoir une section, dans un plan (ici YZ) perpendiculaire à la paroi principale PP, en forme générale de L (éventuellement inversé). Ce type de section offre une très bonne résistance en cas de choc latéral.

Egalement par exemple, et comme illustré non limitativement sur les figures 1 et 3, les premières cloisons C1 peuvent être agencées en créneaux, et les secondes cloisons C2 peuvent être aussi agencées en créneaux. Mais d'autres agencements peuvent être envisagés, et notamment en accordéon ou en triangles, par exemple.

Egalement par exemple, et comme illustré non limitativement sur les figures 1 à 3, les secondes cloisons C2 peuvent être supportées par les premières cloisons C1. Cela est tout particulièrement intéressant lorsque les premières C1 et secondes C2 cloisons sont agencées en créneaux, car les surfaces d'appui superposées sont importantes et permettent d'augmenter la capacité d'amortissement d'énergie tout en facilitant le soudage.

Egalement par exemple, et comme illustré non limitativement sur les figures 1 et 2, le longeron LV peut comprendre une paroi inférieure PI longitudinale (ce qui signifie qu'elle s'étend suivant la direction longitudinale X), prolongeant sensiblement à 90° la paroi principale PP, et sur laquelle est installé fixement l'ensemble inférieur El. Le mot « sensiblement » signifie ici égal à 90° à plus ou moins cinq degrés. Cela permet non seulement de supporter le dispositif de renfort DR, mais aussi de solidariser fixement la partie sensiblement horizontale de l'équerre inférieure EQI sur cette paroi inférieure PI, par exemple par soudage (mais cela pourrait être par vissage ou rivetage), et ainsi de renforcer encore plus l'ancrage du dispositif de renfort DR pour permettre aux premières C1 et secondes C2 cloisons d'amortir l'énergie efficacement.

## Revendications

1. Longeron (LV) propre à être installé parallèlement à un côté longitudinal (CL) d'un plancher (PV) d'un soubassement (SV) d'un véhicule automobile, ledit longeron (LV) comprenant une paroi principale (PP) longitudinale et à laquelle est solidarisé un dispositif de renfort (DR) comprenant i) des ensembles inférieur (EI) et supérieur (ES) respectivement de premières (C1) et secondes (C2) cloisons installées perpendiculairement à ladite paroi principale (PP), et ii) des équerres inférieure (EQI) et supérieure (EQS) longitudinales, auxquelles sont solidarisés fixement et respectivement lesdits ensembles inférieur (EI) et supérieur (ES), et solidarisées fixement à ladite paroi principale (PP), **caractérisé en ce que** lesdites premières (C1) ou secondes (C2) cloisons comprennent un décrochement (DC) sur un côté orienté vers ladite paroi principale (PP), et **en ce que** ledit dispositif de renfort (DR) comprend en outre un raidisseur (RL) longitudinal et comportant une première paroi (PR1) logée dans lesdits décrochements (DC) et prolongée par une seconde paroi (PR2) solidarisée fixement à ladite équerre inférieure (EQI) ou supérieure (EQS).

2. Longeron selon la revendication 1, **caractérisé en ce que** lesdits décrochements (DC) sont définis au voisinage d'une interface entre lesdites premières (C1) et secondes (C2) cloisons.

3. Longeron selon la revendication 2, **caractérisé en ce que** ladite première paroi (PR1) du raidisseur (RL) est solidarisée fixement auxdites premières (C1) et secondes (C2) cloisons au niveau desdits décrochements (DC).

4. Longeron selon l'une des revendications 1 à 3, **caractérisé en ce que** lesdits décrochements (DC) sont définis dans lesdites premières cloisons (C1) sur ledit côté orienté vers ladite paroi principale (PP), et ladite seconde paroi (PR2) est solidarisée fixement à ladite équerre inférieure (EQI).

5. Longeron selon l'une des revendications 1 à 4, **caractérisé en ce que** ledit raidisseur (RL) a une section, dans un plan perpendiculaire à ladite paroi principale (PP), en forme générale de L.

6. Longeron selon l'une des revendications 1 à 5, **caractérisé en ce que** lesdites premières cloisons (C1) sont agencées en créneaux, et lesdites secondes cloisons (C2) sont agencées en créneaux.

7. Longeron selon l'une des revendications 1 à 6, **caractérisé en ce que** lesdites secondes cloisons (C2) sont supportées par lesdites premières cloisons (C1).

8. Longeron selon l'une des revendications 1 à 7, **caractérisé en ce qu'**il comprend une paroi inférieure (PI) longitudinale, prolongeant sensiblement à 90° ladite paroi principale (PP), et sur laquelle est installé fixement ledit ensemble inférieur (EI).

9. Véhicule automobile comprenant un soubassement (SV) comportant un plancher (PV) ayant des côtés longitudinaux (CL) droit et gauche, **caractérisé en ce que** ledit soubassement (SV) comprend en outre deux longerons (LV), droit et gauche, selon l'une des revendications précédentes, installés respectivement parallèlement auxdits côtés longitudinaux (CL) droit et gauche.

10. Véhicule selon la revendication 9, **caractérisé en ce qu'**il comprend un ensemble de batterie rechargeable (EB) installé sous ledit plancher (PV) entre lesdits longerons (LV) droit et gauche.
